# EUROPEAN PATENT SPECIFICATION

(11) **EP 1 821 356 B1**
(45) Date of publication and mention of the grant of the patent: **02.05.2012**
(21) Application number: 05787974.4
(22) Date of filing: 29.09.2005
(51) Int. Cl.: H01M 8/02, H01M 8/10, H01M 8/04

(54) **FUEL CELL AND POWER GENERATING METHOD**
BRENNSTOFFZELLE UND STROMERZEUGUNGSVERFAHREN
Pile à combustible et procédé de production d'énergie

(30) Priority: 05.10.2004 JP 2004292738; 12.01.2005 JP 2005005034; 23.06.2005 JP 2005182978; 01.09.2005 JP 2005253098
(43) Date of publication of application: 22.08.2007
(73) Proprietor: Aquafairy Corporation, Nishikyo-ku Kyoto-shi Kyoto 615-8245 (JP)
(72) Inventor: YANO, Masaya, c/o NITTO DENKO CORPORATION, Ibaraki-shi, Osaka, 567-18680 (JP); SUGIMOTO, Masakazu, c/o NITTO DENKO CORPORATION, Ibaraki-shi, Osaka, 567-18680 (JP); SUGITA, Taiichi, c/o NITTO DENKO CORPORATION, Ibaraki-shi, Osaka, 567-18680 (JP); OKEYUI, Takuji, c/o NITTO DENKO CORPORATION, Ibaraki-shi, Osaka, 567-18680 (JP)
(74) Representative: Sajda, Wolf E.
(86) International application number: PCT/JP2005/017952
(87) International publication number: WO 2006/038519

(56) References cited:
- EP-A- 1 339 125
- WO-A-2004/079845
- DE-A1- 10 304 657
- JP-A- 2002 373 682
- JP-A- 2003 036 865
- JP-A- 2004 171 842
- JP-A- 2004 172 026
- JP-A- 2004 183 681

## Description

### TECHNICAL FIELD

The present invention relates to a fuel cell and a power generating method, in which a power is generated by supplying (including natural supplying) a hydrogen gas and an oxygen-containing gas to a unit cell, particularly, which are useful technique for a portable instrument.

### BACKGROUND ART

Since a polymer-type fuel cell using a solid polymer electrolyte such as a polymer electrolyte has a high energy conversion efficiency, and is thin, small and light, development of the cell is activated for a home cogeneration system and an automobile. As a structure of the previous technique of such the fuel cell, a structure shown in Fig. 12 is known (for example, see Non-Patent Literature 1).

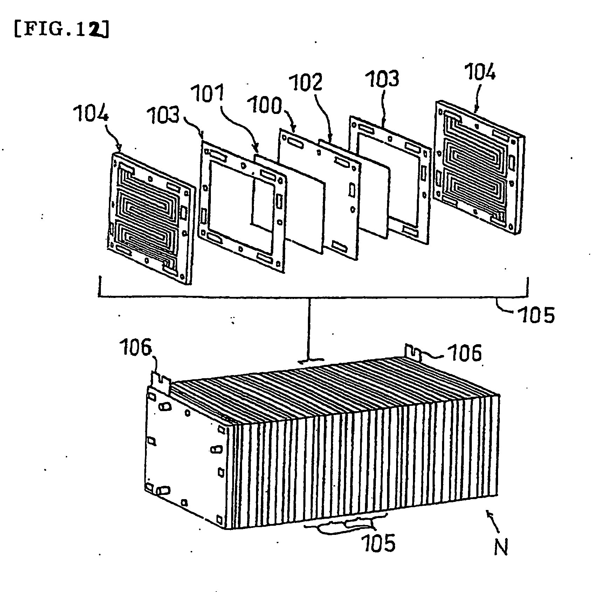

That is, as shown in Fig. 12, an anode 101 and a cathode 102 are arranged, while holding a solid polymer electrolyte membrane 100. Further, this is held by one pair of separators 104 via a gasket 103 to constitute a unit cell 105. In respective separators 104, a gas flow path groove is formed, a flow path for a reducing gas (e.g. hydrogen gas) is formed by contacting with an anode 101, and a flow path for an oxidizing gas (e.g. oxygen gas) is formed by contacting with a cathode 102. Each gas is supplied to an electrode reaction (chemical reaction in electrode) by the action of a catalyst carried in the interior of an anode 101 or a cathode 102 while flown in each flow path in a unit cell 105, resulting in generation of an electric current and ion conduction.

Many unit cells 105 are laminated, and unit cells 105 are connected electrically in series to constitute a fuel cell N, and an electrode 106 can be taken out from laminated unit cells 105 on both ends. Such the fuel cell N is paid an attention in a variety of utilities, particularly, as an electric automobile electric source or a home distributed electric source, due to the characteristic of being clean and highly efficient.

On the other hand, with activation of IT technique in recent years, there is a tendency that a mobile instrument such as a portable telephone, a notebook personal computer, and a digital camera is frequently used and, as an electric source for them, a lithium ion secondary cell is used in most cases. However, with high functionalization of a mobile instrument, a consumed power is increasingly augmented and, as an electric source therefor, a fuel cell which is clean and highly effective has bean paid attention to.

For this reason, as a fuel cell which can be more miniaturized, a fuel cell comprising a solid polymer electrolyte membrane/electrode connected body, a cathode-side metal plate, on which a flow path for an oxidizing agent gas is formed, and an anode-side metal plate, on which a flow path for a fuel gas is formed, and having a structure which is sealed by securing circumferences of metal plates on both sides with a fixing pin, and positioning a gas packing at a periphery internal thereto has been proposed (for example, see Patent Literature 1).

However, any of the aforementioned fuel cells has a structure in which after a fuel gas such as a hydrogen gas is supplied, 50 to 80% of the gas is consumed in a reaction, and a remaining fuel gas is discharged from a final stage unit cell. For this reason, in the case where a hydrogen gas is used, since an amount of a discharged hydrogen gas is increased, and a problem of waste gas treatment and gas release therefor arises, this is not suitable for portable instrument utility from a viewpoint of the cost and an apparatus size.

On the other hand, the following Patent Literature 2 discloses a fuel cell system in which a pure hydrogen gas is supplied to an anode-side of a unit cell, a concentration of an impurity gas on an anode-side is detected while a power is generated and, when the concentration is not lower than a constant concentration, a gas is purged (discharged) from an anode-side.

However, in this fuel cell system, since a general cell of a fuel cell is used, for example, there is a problem that, when a concentration of an impurity gas in a gas discharged from an anode-side becomes not less lower than 50%, a power generation efficiency becomes less than 50%, and the system can not be used in normal power supply utility. In addition, there is a problem that, even when a concentration of a hydrogen gas in a discharged gas is reduced to less than 50%, since a discharge amount of a purging gas is increased, an absolute amount of a discharged hydrogen gas is increased.

Furthermore, in the aforementioned fuel cell system, detection of a concentration and purging control based thereon have a complicated apparatus construction, and have the high cost, therefore, it is difficult to apply the system to a small and light fuel cell for a portable instrument. In addition, in a method of consuming a whole hydrogen gas in a unit cell without discharging a hydrogen gas from a unit cell, an impurity gas is concentrated in a hydrogen gas flow path in a unit cell, and a cell output is reduced shortly after power generation initiation.

Meanwhile, the following Patent Literature 3 discloses a hydrogen generation apparatus in which a metal such as iron is accommodated in a reaction vessel, and water is supplied thereto to perform a reaction, as a hydrogen generation apparatus for generating hydrogen by a reaction with water (e.g. a reaction equation in the case of use of iron as a metal is expressed by 3Fe+4H₂O→Fe₃O₄+4H₂). In this apparatus, a reaction vessel accommodating a metal is detachable and, separately, a metal is heated and reduced with a hydrogen gas or the lie.

However, this hydrogen generation apparatus is for the purpose of supplying an approximately constant amount of a hydrogen gas, and is not a device in which a variation in a consumed amount of a hydrogen gas is considered. Therefore, when one attempts to apply this hydrogen generation apparatus to a portable electronic instrument, a futile hydrogen gas is generated in the case of reduction in a consumed amount of a power, and a problem of waste gas treatment and reduction in a power generation efficiency arises. In addition, in a miniaturized and thinned fuel cell which can be incorporated into a portable electronic instrument, a pressure resistance performance is generally low, and a problem of cell damage due to increase in a pressure with an excessive hydrogen gas easily arises. For this reason, a system in which an anode-side of a fuel cell is closed can not be realized, resulting in adaptation of a hydrogen gas flowing manner, therefore, a problem of waste gas treatment and reduction in a power generation efficiency becomes remarkable.

Furthermore, as a fuel cell system considering a variation in a consumed amount of a fuel gas such as a hydrogen gas, a fuel cell system in which a reaction solution in a liquid reservoir is moved to a reaction part where a reaction is performed, by decrease in an internal pressure of a gas reservoir, in which a fuel gas is stored, with consuming a fuel gas (a reaction gas), is proposed (for example, see Patent Literature 4 etc.). In this system, control of stopping a reaction solution from moving to a reaction part becomes possible, when a consumed amount of a fuel gas is decreased, and an internal pressure of a gas reservoir is increased.

However, since there is usually a time delay relative to supply of a reaction solution in generation of a fuel gas by a reaction, in the case of this system, even when movement of a reaction solution is stopped, an internal pressure of a gas reservoir continues to increase in many cases. Thereby, in particular in the case of portable instrument utility, since the pressure resistance performance of a fuel cell is low, a problem of cell damage arises in some cases. In addition, in the aforementioned system, since discharge of a gas from an anode-side of a fuel cell is not performed, and an impurity gas is concentrated on an anode-side, resulting in a structure easily leading to decrease in a power generation efficiency of a fuel cell.

| | |
|---|---|
| Non-Patent Literature 1: | Nikkei Mechanical, Separate Volume "Frontier of Fuel Cell Development", published on June 29, 2001, by Nikkei BP, Chapter 3 PEFC, 3.1 Principle Characteristic P46 |
| Patent Literature 1: | Japanese Patent Application Laid-Open (JP-A) No.8-162145 |
| Patent Literature 2: | JP-A No.2003-243020 |
| Patent Literature 3: | JP-A No.2004-149394 |
| Patent Literature 4: | JP-A No.2004-281384 |

The document EP-A-1 339 125 discloses a fuel cell comprising one or a plurality of unit cells formed of a sheet-like solid polymer electrolyte, a cathode-side electrode plate which is arranged on one side of the solid polymer electrolyte, an anode-side electrode plate which is arranged on the other side thereof, an oxygen-containing gas supply unit for supplying an oxygen-containing gas to the cathode-side electrode plate, and a hydrogen gas flow path unit for supplying a hydrogen gas to the anode-side electrode plate. The document is silent, however, as to details of a hydrogen gas flow path unit and details of discharging a gas at an outlet of the hydrogen gas flow path unit.

### DISCLOSURE OF THE INVENTION

### Problems to be solved by the invention

Accordingly, an object of the present invention is to provide a fuel cell which does not need a complicated control mechanism, discharges a small amount of a hydrogen gas, hardly raises a problem of waste gas treatment and gas release, and can perform power generation stably, continuously and effectively, and a power generation method using the same.

### Means to solve the problems

In order to attain the aforementioned object, the present inventors intensively studied, and found out that, by using a unit cell in which a flow path cross-section area of a hydrogen gas flow path unit on an anode-side is sufficiently small, and performing power generation while a gas is discharged at 0.02 to 4% by volume relative to a hydrogen gas supplied thereto, power generation can be performed stably, continuously and effectively, resulting in completion of the present invention.
According to the invention, the object is solved by a fuel cell as defined in claim 1. Advantageous further developments of the fuel cell according to the invention are disclosed in subclaims 2 to 5.
As to the method, the object is solved by a power generating method as defined in claim 6. Advantageous further developments of the method are specified in depending subclaims 7 and 8.

That is, a fuel cell of the present invention is a fuel cell comprising one or a plurality of unit cells formed of a sheet-like solid polymer electrolyte, a cathode-side electrode plate which is arranged on one side of the solid polymer electrolyte, an anode-side electrode plate which is arranged on the other side thereof, an oxygen-containing gas supplying unit for supplying an oxygen-containing gas to the cathode-side electrode plate, and a hydrogen gas flow path unit for supplying a hydrogen gas to the anode-side electrode plate, characterized in that, regarding the unit cell which is to be a final stage of hydrogen gas supply, a flow path cross-section area of the hydrogen gas flow path unit is set up to 1% of an area of the anode-side electrode plate and, at the same time, a discharge control mechanism for discharging a gas at 0.02 to 4% by volume relative to a hydrogen gas supplied to the unit cell is provided at an outlet of the hydrogen gas flow path unit.

According to the fuel cell of the present invention, since a unit cell having a flow path cross-section area of a hydrogen gas flow path unit which is sufficiently small relative to an electrode area is used, a linear velocity of a hydrogen gas supply becomes great and, upon consumption of a hydrogen gas approximately over a solid polymer electrolyte, an impurity gas is not diffused on an upstream side, and is concentrated on a downstream side, therefore, only by discharging a very small amount of a gas with a discharge control mechanism, accumulation of an impurity gas into a unit cell can be prevented. Thereupon, since a concentration of an impurity gas becomes high only in a vicinity of a discharge control mechanism, when a whole unit cell is seen, an impurity gas is hardly present, therefore, a power generation efficiency can be maintained high. As a result, since a complicated control mechanism is not necessary, power generation can be performed stably, continuously and efficiently, and a discharge amount of a hydrogen gas is small, a problem of waste gas treatment and gas discharge hardly arises, and a fuel cell which is particularly advantageous in potable instrument utility is obtained.

In the above, it is preferable that the discharge control mechanism is a pressure control valve which discharges a gas so that a pressure on a primary side becomes not higher than a constant pressure. A hydrogen gas is excessively supplied to a unit cell at an approximately constant amount in many cases and, by such the pressure control valve, a part of a gas can be discharged when a pressure becomes not lower than a constant pressure, and it becomes easy to adjust an amount at a discharge amount which is 0.02 to 4% by volume relative to a supplied hydrogen gas. Such the pressure control valve may be miniaturized and, by using this, a fuel cell which is advantageous in portable instrument utility is obtained.

In a specific embodiment of the present invention a fuel cell is disclosed wherein circumferences of metal plates on both sides of the electrode plates are sealed by bending pressing in a state where they are electrically insulated.

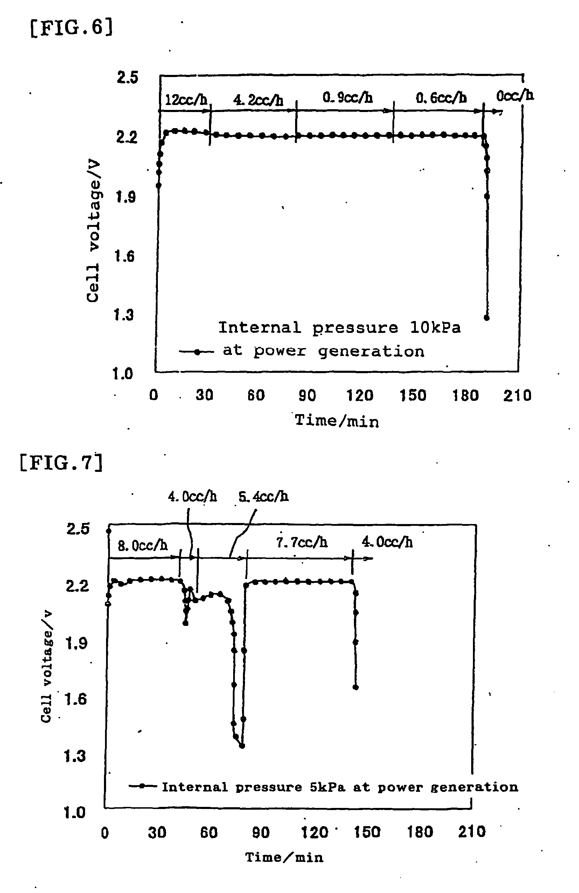

According to such an embodiment of the present invention, a cathode-side metal plate allows for flow of a gas to a cathode-side electrode plate, and an anode-side metal plate allows for flow of a fuel to an anode-side electrode plate, thereby, an electrode reaction can be generated on each electrode plate, and a current can be taken out from a metal plate. In addition, since a circumference of a metal plate is sealed with bending press in the state where it is electrically insulated, sealing can be assuredly performed for every unit cell without increasing a thickness to some extent while a short between both of them is prevented. Thereby, since maintenance becomes easy, and a rigidity of a cell member is not required as compared with the previous structure shown in Fig. 7, each unit cell can be greatly thinned.
Thereupon, when independent cells using a metal plate for thinning are adopted like the present invention, since leakage from a sealing part occurs when an internal pressure becomes too high, and contact with an electrode plate is insufficient due to deformation of a metal plate, it becomes advantageous to provide a pressure control valve. In addition, by providing a pressure control valve at an outlet of a fuel, an internal pressure can be controlled at an approximately constant pressure only by supplying a fuel through an inlet at a constant amount or more, and a power generation efficiency can be improved by pressurizing.

In the above, it is preferable that the pressure control valve comprises power imparting means for forcing a valve element toward a valve seat, a regulation mechanism for regulating a power imparting force of the power imparting means, a valve space having a valve seat and accommodating a valve element, an introduction flow path which is communicated with the valve space and can be sealed with the valve element, and a discharge flow path which is communicated with the outside from the valve space.

According to this pressure control valve, when a pressure of a fuel gas relative to the valve element sealing the introduction flow path becomes a constant pressure or higher, since a gap is generated between the valve element and the valve seat against a power imparting force of the power imparting means, and a fuel gas is discharged to the outside via the valve space and the discharge flow path, an inside pressure can be maintained approximately constant. In addition, since a regulation mechanism for regulating a power imparting force of the power imparting means for forcing the valve element is provided, a set value of internal pressure control can be changed. And, since a pressure control valve is constituted of a most simple construction, a pressure control valve can be miniaturized and thinned (e.g. diameter 4 mm, or a height 5 mm is possible), and thinning of a whole fuel cell becomes easy.

In addition, it is preferable that the pressure control valve can control a pressure of the internal surface side space at a prescribed value in a range of 0.02 MPa to 0.20 MPa. When a pressure is within this range of a pressure, as shown by results of Examples, output of the fuel cell can be improved, and leakage from a sealing part hardly occurs.

On the other hand, a power generating method of the present invention is a power generating method of performing power generation, comprising supplying a hydrogen gas and an oxygen-containing gas to one or a plurality of unit cells formed of a sheet-like solid polymer electrolyte, a cathode-side electrode plate which is arranged on one side of the solid polymer electrolyte, an anode-side electrode plate which is arranged on the other side thereof, an oxygen-containing gas supply unit for supplying an oxygen-containing gas to the cathode-side electrode plate, and a hydrogen gas flow path unit for supplying a hydrogen gas to the anode-side electrode plate, a unit cell in which a flow path sectional area of the hydrogen gas flow path unit is not more than 1% of an area of the anode-side electrode plate is used as a unit cell which is to be a final stage of hydrogen gas supply and, at the same time, a gas is discharged from the unit cell at 0.02 to 4% by volume relative to a hydrogen gas supplied to the unit cell which is to be a final stage of hydrogen gas supply.

According to the power generating method of the present invention, power generation is performed.while the impurity gas is concentrated near the outlet by flow of a hydrogen gas, a concentration of the impurity gas becomes high only in a vicinity of the outlet, therefore, when a whole unit cell is seen, since there is little impurity gas, a power generation efficiency can be maintained high. In addition, even when the impurity gas is concentrated near the outlet, if discharge is not performed, an amount of the impurity gas is increased, and power generation is stopped, but an amount of the impurity gas can be retained at a constant amount or smaller by discharging a small amount of a gas. As a result, a complicated control mechanism becomes unnecessary, an amount of a hydrogen gas to be discharged is small, a problem of waste gas treatment and gas release hardly arises, and power generation can be performed stably, continuously and effectively.

According to this construction, since the unit cell in which a flow path sectional area of the hydrogen gas flow path unit is sufficiently small relative to an electrode area, a linear velocity of hydrogen gas supply becomes great and, upon consumption of a hydrogen gas by an approximately whole solid polymer electrolyte, an impurity gas is not diffused to an upstream side, but is concentrated on a downstream side, therefore, by only discharging a very small amount of a gas, accumulation of the impurity gas in the unit cell can be prevented. Thereupon, since a concentration of the impurity gas becomes high only in a vicinity of the outlet, when a whole unit cell is seen, there is little impurity gas and, therefore, a power generation efficiency can be maintained high.

In addition, it is preferable that a hydrogen gas is supplied to the unit cell which is to be a final stage of hydrogen gas supply, so that a linear flow rate of a supply gas calculated based on a flow path sectional area of the hydrogen gas flow path unit becomes not less than 0.1 m/sec. Thereby, an impurity gas can be more assuredly concentrated on a downstream side without diffusion to an upstream side.

In addition, it is preferable that a concentration of a hydrogen gas contained in a gas discharged from the unit cell is less than 50% by volume. Thereby, an impurity gas can be effectively discharged at a high concentration to the outside of a system.

### BRIEF DESCRIPTION OF THE DRAWINGS

- Fig. 1: An assembling perspective showing one example of a unit cell of the fuel cell of the present invention.
- Fig. 2: A longitudinal sectional view showing one example of a unit cell of the fuel cell of the present invention.
- Fig. 3: A schematic construction view showing one example of the fuel cell of the present invention constructed of a plurality of unit cells.
- Fig. 4: A cross-sectional view showing one example of a pressure control valve using the fuel cell (unit cell) of the present invention.
- Fig. 5: A graph showing a change in a voltage with time in Examples 1 to 3, Comparative Examples 1 to 3, and Reference Example 1.
- Fig. 6: A graph showing a change in a voltage with time when a discharge amount of a gas is changed in Example 4.
- Fig. 7: A graph showing a change in a voltage with time when a discharge amount of a gas is changed in Example 5.
- Fig. 8: A graph showing a change in a gas composition when a discharge amount of a gas is changed in Example 6.
- Fig. 9: A main portion showing other example of a caulking structure in the fuel cell of the present invention.
- Fig. 10: A longitudinal sectional view showing other example of the fuel cell (unit cell) of the present invention. And, (a) is an assembling perspective, and (b) is a longitudinal sectional view.
- Fig. 11: A graph showing a relationship between a voltage and an output of the fuel cells obtained in Examples of the present invention, and the like.

- Fig. 12: An assembling perspective showing one example of the previous fuel cell.

### Explanation of symbols

- 1: Solid polymer electrolyte
- 2: Cathode-side electrode plate
- 3: Anode-side electrode plate
- 4: Cathode-side metal plate
- 4c: Opening
- 5: Anode-side metal plate
- 5c: Inlet
- 5d: Outlet
- 6: Insulating material
- 9: Flow path groove
- 10: Pressure control valve (discharge control mechanism)
- 11: Valve seat
- 12: Valve element
- 13: Power imparting means
- 14: Regulation mechanism
- 15: Valve seat space
- 16: Introduction flow path
- 17: Discharge flow path
- 20: Hydrogen gas generation means
- 21: Hydrogen generator

- Sn: Final stage
- UC: Unit cell

### BEST MODE FOR CARRYING OUT THE INVENTION

### Fuel cell and power generating method of a first embodiment

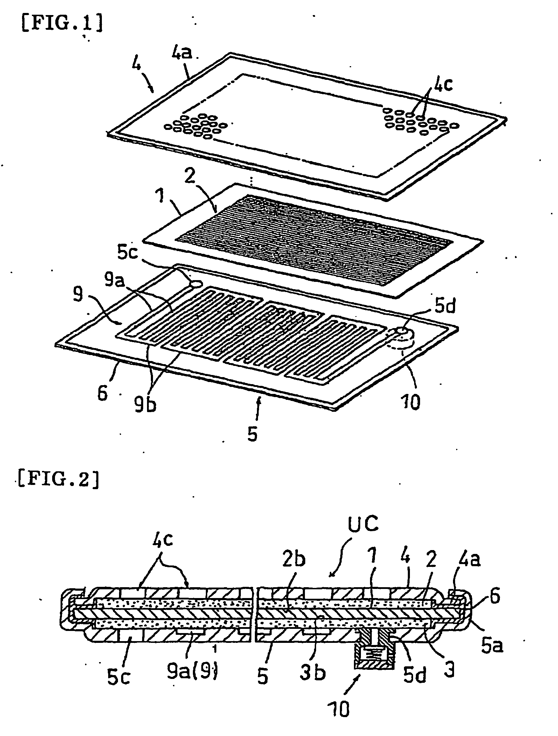

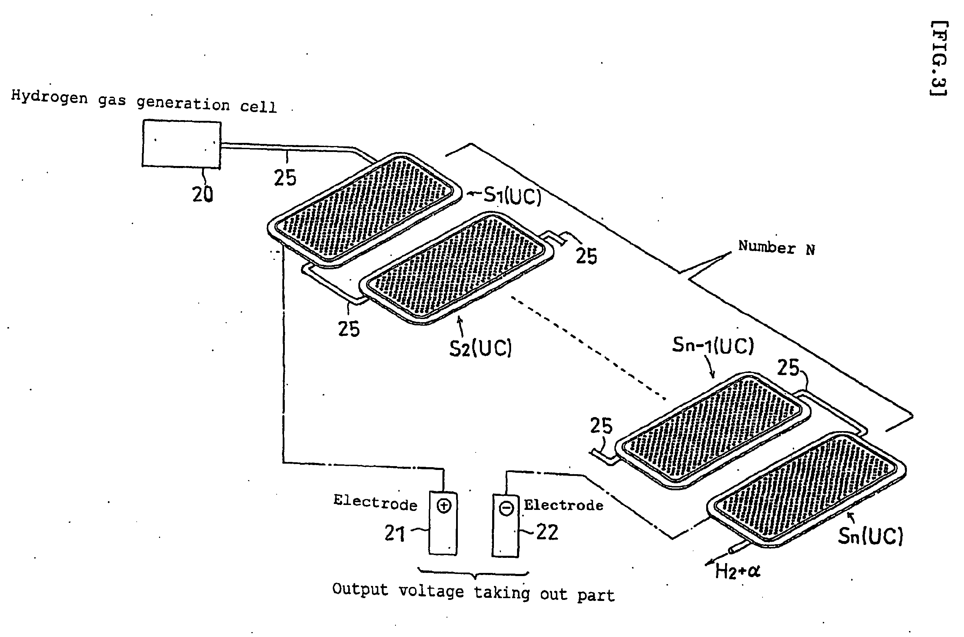

A first embodiment of the invention will be explained below by referring to the drawings. Fig. 1 is an assembling perspective showing one example of a unit cell of the fuel cell of the first embodiment. Fig. 2 is a longitudinal sectional view showing one example of a unit cell of the fuel cell of the first embodiment. Fig. 3 is a schematic construction view showing one example of the fuel cell of the first embodiment constructed of a plurality of unit cells.

The fuel cell of the first embodiment, as shown in Fig. 1 to Fig. 3, comprises one or a plurality of unit cells UC formed of a sheet-like solid polymer electrolyte 1, a cathode-side electrode plate 2 which is arranged on one side of the solid polymer electrolyte 1, an anode-side electrode plate 3 which is arranged on the other side thereof, an oxygen-containing gas supply unit for supplying an oxygen-containing gas to the cathode-side electrode plate 2, and a hydrogen gas flow path unit for supplying a hydrogen gas to the anode-side electrode plate 3. In the present embodiment, as shown in Fig. 3, an example, in which a fuel cell is constructed of a plurality of unit cells UC, is shown.

First, the unit cell UC will be explained. The present embodiment, as shown in a Fig. 1 to Fig. 2, shows an example using a unit cell UC in which a flow path groove 9 for a hydrogen gas is formed on an anode-side metal plate 5 by etching to construct a hydrogen gas flow path unit, and an opening 4c for naturally supplying the air is formed on a cathode-side metal plate 4 to construct an oxygen-containing gas supply unit. Like this, by constructing a gas supply unit with metal plates 4, 5, thinning and weight saving of the fuel cell can be realized.

As the solid polymer electrolyte 1, any solid polymer electrolyte can be used as far as it is used in the previous solid polymer membrane-type cell, but from a viewpoint of chemical stability and electrical conductivity, a cation exchange membrane consisting of a perfluorocarbon polymer having a sulfonic acid group which is a superstrong acid is suitably used. As such the anion exchange membrane, Nafion (registered trademark) is suitably used.

Besides, for example, a porous membrane consisting of a fluorine resin such as polytetrafluoroethylene, which is impregnated with the Nafion or other ion conducting substance, and a porous membrane or a non-woven fabric consisting of a polyolefin resin such as polyethylene and polypropylene, which carries the Nafion or other ion conducting substance, may be used.

As a thickness of the solid polymer electrolyte 1 grows smaller, this is effective in thinning as a whole, but in view of the ion conducting function, a strength, and the handling property, 10 to 300 µm is usable, and 25 to 50 µm is preferable.

As electrode plates 2, 3, an electrode plate which exerts the function as a gas diffusion layer to supply and discharge a fuel gas, an oxidizing gas and a water steam and, at the same time, exerts the current collecting function can be used. Electrode plates 2, 3, which are the same or different, can be used, and it is preferable that a substrate therefor carries a catalyst having the electrode catalyzing action. It is preferable that the catalyst is carried at least by inner surfaces 2b, 3b in contact with the solid polymer electrolyte 1.

As the electrode substrate, for example, a fibrous carbon such as a carbon paper and a carbon fiber non-woven fabric, and an electrically conducting porous material such as an aggregate of electrically conducting polymer fibers can be used. Generally, electrode plates 2, 3 is manufactured by adding a water-repellent substance such as a fluorine resin to such the electrical conducting porous material and, when a catalyst is carried therein, electrode plates is formed by mixing a catalyst such as platinum fine particles and a water-repellent substance such as a fluorine resin, mixing this with a solvent to become pasty or ink-like, and coating this on one side of an electrode substrate opposite to the solid polymer electrolyte membrane.

Generally, electrode plates 2, 3 and the solid polymer electrolyte 1 are designed depending on a reducing gas and an oxidizing gas to be supplied to the fuel cell. In the first embodiment, an oxygen-containing gas such as the air and pure oxygen is used as an oxidizing gas, and a hydrogen gas is used as a reducing gas (fuel). In the first embodiment, since a reaction between oxygen and hydrogen ions occurs to produce water on a cathode-side electrode plate 2 on which the air is naturally supplied, it is preferable to design the electrolyte depending on such the electrode reaction.

For reducing a discharge amount of a hydrogen gas, and performing power generation stably, continuously and effectively, a purity of a hydrogen gas is preferably not lower than 95%, more preferably not lower than 99%, further preferably not lower than 99.9%.

As the catalyst, at least one kind of metal selected from platinum, palladium, ruthenium, rhodium, silver, nickel, iron, copper, cobalt and molybdenum, or an oxide thereof can be used, or one in which these catalysts are harbored to a carbon black or the like in advance may be used.

As the thickness of electrode plates 2, 3 grows smaller, this is effective in thinning as a whole, but in view of an electrode reaction, a strength, and the handling property, 50 to 500 µm is preferable.

Electrode plates 2, 3 and the solid polymer electrolyte 1 may be laminated and incorporated by adhesion, fusion or the like in advance, or may be merely arranged by lamination. Such the laminated body may be obtained and used as a membrane electrode assembly (MEA).

In the present embodiment, a cathode-side metal plate 4 is arranged on a surface of a cathode-side electrode plate 2, and an anode-side metal plate 5 is arranged on a surface of an anode-side electrode plate 3. And, an inlet 5c and an outlet 5d for a hydrogen gas are provided on the anode-side metal plate 5, and a flow path groove 9 is provided therebetween.

In the first embodiment, it is preferable that a diffusion suppression mechanism which suppresses diffusion of water from a cathode-side to the outside is provided on an oxygen-containing gas supply unit. In the present embodiment, an opening 4c for naturally supplying oxygen in the air is provided on the cathode-side metal plate 4, and this corresponds to a diffusion suppression plate which functions as a diffusion suppression mechanism, and is constructed so that the air can be naturally supplied via the diffusion suppression plate.

It is preferable that an opening 4c is provided on the cathode-side metal plate 4 which is a diffusion suppression plate, at an opening rate of 10 to 30% relative to an area of the cathode-side electrode plate 2. In the case of such the opening rate, when the rate is in this range of an opening rate, the number, the shape, the size, and the formation position of an opening 4c may be any ones. When the rate is in the above range of an opening rate, a current can be sufficiently collected from the cathode-side electrode plate 2. In an opening 4c of the cathode-side metal plate 4, a plurality of circular pores or slits may be provided, for example, regularly or randomly.

As metal plates 4, 5, any metal can be used as far as it does not adversely influence on an electrode reaction, and examples include a stainless plate, nickel, copper, a copper alloy. From a viewpoint of an elongation, a weight, an elasticity, a strength, corrosion resistance, pressing processability, and etching processability, a stainless plate and nickel are preferable. It is preferable that metal plates 4, 5 are plated with a noble metal such as gold plating, in order to reduce a contact resistance with electrode plates 2, 3.

In the first embodiment, from a viewpoint that an impurity gas is not diffused to an upstream side, but is concentrated to a downstream side, in a unit cell UC which is to be a final stage of hydrogen gas supply, a flow path sectional area of a hydrogen gas flow path unit is not more than 1% of an area of the anode-side electrode plate 3. This ratio is preferably not more than 0.5%, more preferably not more than 0.2%, further preferably 0.001 to 0.1%. In the first embodiment, the flow path sectional area of a hydrogen gas flow path unit refers to an area of a cross-section vertical to a flow path direction of a space formed as a flow path, presumed that an electrode plate 3 is entirely plane. Even when this area is nearly zero, by flowing a hydrogen gas through a porous void part of the electrode plate 3, power generation can be performed. In addition, an area of the anode-side electrode plate 3 refers to a whole area of the anode-side electrode plate 3 regardless of the presence or the absence of an electrode reaction.

For reducing a flow path sectional area like this, it is effective to reduce a width of a flow path by decreasing a depth of a flow path groove or increasing a length of a flow path.

Other than the flow path sectional area, a flow path groove 9 provided on the anode-side metal plate 5 may have any planar shape or cross-sectional shape as far as a flow path for a hydrogen gas or the like can be formed by contacting with the electrode plate 3. In view of a flow path density, a lamination density at lamination, and the bending property, it is preferable that the flow path groove is formed mainly of a longitudinal groove 9a parallel to one side of the metal plate 5, and a transverse groove 9b vertical to the side. In the present embodiment, a plurality of three in a shown example) longitudinal grooves 9a are connected to a transverse groove 9b in series, to take a balance between a flow path density and a flow path length.

In addition, a part of a flow path groove 9 of such the metal plate 5 (e.g. transverse groove 9b) may be formed on an outer surface of the electrode plate 3. As a method of forming a flow path groove on an outer surface of the electrode plate 3, a mechanical method such as heat pressing and cutting may be used, but in order to perform fine processing suitably, it is preferable to perform groove processing by laser irradiation. From a viewpoint of laser irradiation, as a substrate for electrode plates 2, 3, an aggregate of fibrous carbons is preferable.

One or a plurality of inlets 5c communicating with a flow path groove 9 of the metal plate 5 may be formed. It is preferable that only one outlet 5d is formed, and it is preferable that the outlet is provided on a downstream side end of the flow path groove 9. As the outlet 5d approaches a downstream side end of the flow path groove 9, it becomes possible to discharge effectively an impurity gas which has been concentrated to a higher concentration.

As a thickness of metal plates 4, 5 grows smaller, this is effective in thinning as a whole, but in view of a strength, an elongation, a weight, an elasticity, and the handling property, 0.1 to 1 mm is preferable.

As a method of forming the flow path groove 9 on the metal plate 5, etching is preferable from a viewpoint of a precision and easiness of processing. For example, in the flow path groove 9 formed by etching, it is preferable that a width is 0.1 to 10 mm, and a depth is 0.05 to 1 mm. In addition, it is preferable that a cross-sectional shape of the flow path groove 9 is generally square, generally trapezoid, generally semi-circular, or V-letter.

It is preferable to utilize etching for forming an opening 4c on the metal plate 4, thinning an outer edge part of metal plates 4, 5, or forming an inlet 5c on the metal plate 5.

After an etching resist having a prescribed shape has been formed on a metal surface using, for example, a dry film resist, etching can be performed using an etching solution depending on a kind of metal plates 4, 5. Alternatively, by selectively etching every metal using a laminated plate of two or more kinds of metals, a cross-sectional shape of the flow path groove 9, and a thickness of a thinned outer edge part can be controlled at a higher precision.

An embodiment shown in Fig. 2 is an example in which a thickness of a caulking part (outer edge part) of metal plates 4, 5 is reduced by etching. By etching the caulking part to a suitable thickness like this, sealing by caulking can be performed more easily. From this point of view, a thickness of the caulking part is preferably 0.05 to 0.3 mm.

In the first embodiment, as far as an oxygen-containing gas supply unit for supplying an oxygen-containing gas is formed on the cathode-side electrode plate 2, and a hydrogen gas flow path unit for supplying a hydrogen gas is formed on the anode-side electrode plate 3, any structure of a formed flow path unit or the like may be used. When a flow path unit or the like is formed of metal plates 4, 5, it is preferable that a circumference of metal plates 4, 5 is sealed with bending pressing in the electrically insulated state. In the present embodiment, an example of sealing with caulking is shown.

Electrical insulation can be performed with a circumferential part of an insulating material 6 or the solid polymer electrolyte 1, or by intervention of both of them. When the insulating material 6 is used, a thickness thereof is preferably not more than 0.1 mm from a viewpoint of thinning. Alternatively, by coating an insulating material, further thinning is possible (for example, a thickness of an insulating material 6 can be 1 µm).

As the insulating material 6, a sheet-like resin, a rubber, a thermoplastic elastomer and a ceramic can be used and, from a viewpoint of enhancing the sealability, a resin, a rubber and a thermoplastic elastomer are preferable and, particularly, polypropylene, polyethylene, polyester, fluorine resin and polyimide are preferable. The insulating material 6 may be incorporated on metal plates 4, 5 in advance by applying to or coating on a circumference of metal plates 4, 5 directly or via a pressure-sensitive adhesive.

As a caulking structure, a structure shown in Fig. 2 is preferable from a viewpoint of sealability, easiness of manufacturing, a thickness and the like. That is, a caulking structure, in which an outer edge part 5a of one metal plate 5 is greater than an outer edge part 4a of other metal plate, and an outer edge part 5a of one metal plate 5 is folded back so as to holding-press an outer edge part 4a of the other metal plate 4 while the insulating material 6 intervenes, is preferable. In this caulking structure, it is preferable that a step is provided on an outer edge part 4a of a metal plate 4 by press processing or the like. Such the caulking structure itself is known as a metal processing, and it can be formed by a known caulking device.

In the fuel cell of the first embodiment, as shown in Fig. 1 to Fig. 3, as to a unit cell UC which is to be a final stage Sn for hydrogen gas supply, a discharge control mechanism for controlling a discharge amount of a gas from a unit cell UC of a final stage Sn is provided at an outlet 5d of a hydrogen gas flow path unit. In the present embodiment, an example in which, as a discharge control mechanism, a pressure control valve 10 for discharging a gas so that a pressure on a primary side becomes a constant pressure or lower is provided, is shown.

Discharge of a gas from a discharge control mechanism in the first embodiment may be intermittent or continuous, and may be at a constant amount, or a discharge amount may be changed. From a viewpoint that the concentrated stage of an impurity gas is stabilized, and a power generation efficiency is maintained high, it is preferable to discharge a gas at a nearly constant amount.

The discharge control mechanism in the first embodiment makes a control so that a gas (including an impurity gas) is discharged at 0.02 to 4% by volume, preferably 0.05 to 3% by volume, more preferably 0.1 to 2% by volume, relative to a hydrogen gas (strictly, a total amount including an impurity gas) supplied to a unit cell UC of a final stage Sn. Herein, when a discharge amount of a gas is changed, an amount is obtained as an average. When a discharge amount of a gas is less than 0.02% by volume, a concentrated impurity gas can not be sufficiently discharged, an output of the fuel cell is reduced with time, and power generation is stopped in a short time. On the other hand, when a discharge amount of a gas exceeds 4% by volume, a discharge amount of a hydrogen gas is increased, and a problem of waste gas treatment and gas release is raised.

When a hydrogen gas is supplied at a constant amount or more through an inlet 5c for a hydrogen gas, a pressure in an internal side space is increased, and a pressure of an internal side space (i.e. hydrogen gas) can be controlled at a prescribed value with a pressure control valve 10. Thereby, leakage from a sealing part, and deteriorated contact between the metal plate 5 and the electrode plate 3 may be prevented.

As the pressure control valve 10, any format may be adopted as far as a pressure in an internal surface side space can be controlled at a prescribed value, but from a viewpoint of a centrifugation of a structure, a self-operated control valve is preferable, and an internal detection type is more preferable than an external detection type.

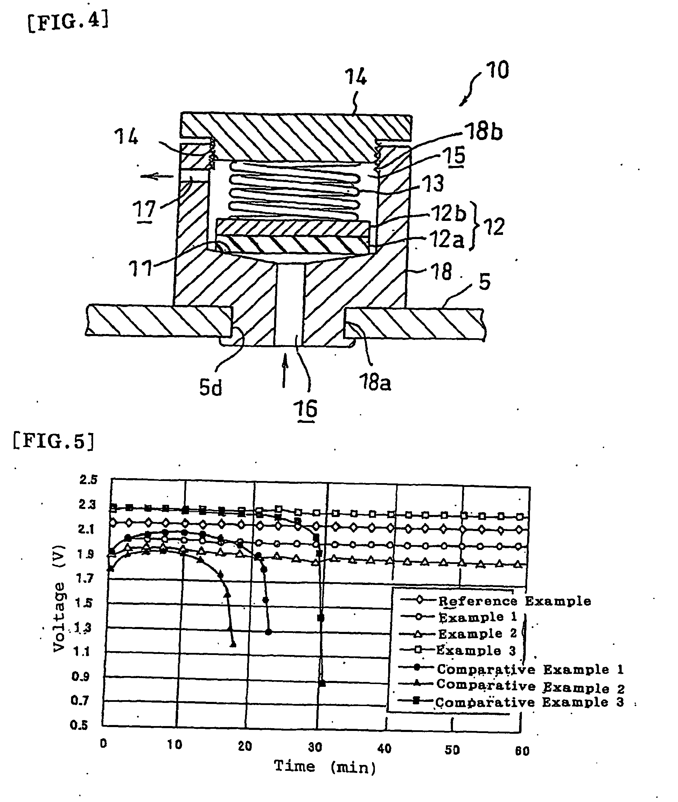

In the present embodiment, as shown in Fig. 4, an example of use of a pressure control valve 10 comprising a power imparting means 13 for forcing a valve element 12 towards a valve seat 11, a regulation mechanism 14 for regulating a power imparting force of the power imparting means 13, a valve seat space 15 having a valve seat 11 and accommodating a valve element 12, an introduction flow path 16 which is communicated with the valve seat space 15 and can be sealed with a valve element 12, and a discharge flow path 17 which is communicated with the outside from the valve seat space 15, is shown.

The pressure control valve 10 is air tightly connected by inserting a connecting part 18a of a cylindrical body 18 forming the valve seat space 15 into an outlet 5d of the anode-side metal plate 5 to caulk an end part. In addition, a male screw part 14a of a regulation mechanism 14 is threaded with a female screw part 18b of the cylindrical body 18 and, by regulating a length of a spring which is a power imparting means 13 by a threading amount, a power imparting force of the power imparting means 13 can be regulated. The valve element 12 is formed of a laminated body of, for example, a metal plate 12b and a silicone rubber 12a.

In this pressure control valve 10, when a pressure of a hydrogen gas to the valve element 12 sealing the introduction flow path 16 becomes a constant pressure or higher, since a gap is generated between the valve element 12 and the valve seat 11 against a power imparting force of the power imparting means 13, and a hydrogen gas is discharged to the outside via the valve seat space 15 and the discharge flow path 17, an internal pressure can be maintained generally constant. In addition, since a regulation mechanism 14 for regulating a power imparting force of the power imparting means 13 for forcing the valve element 12 is provided, a set value of internal pressure control can be changed.

According to this pressure control valve 10, since a pressure control valve can be formed with a simplest construction, a pressure control valve can be miniaturized and thinned (e.g. a diameter of 4 mm and a height of 5 mm is possible), and it becomes easy to make a whole fuel cell thin.

In the first embodiment, one or a plurality of unit cells UC can be used, and, when one unit cell UC is used, since this is a final stage of hydrogen gas supply, a discharge control mechanism is provided on this unit cell UC. When a plurality of unit cells UC are used, they are constructed as follows.

Electrically, respective unit cells UC are usually connected in series, or may be connected in parallel, preferring a current value. In addition, when a voltage is deficient, a bootup circuit (DC-DC converter) is connected, if necessary.

As to a hydrogen gas, respective unit cells UC from an initial stage S1 to a final stage Sn may be connected in series, or a plurality of unit cell UC groups in which cells are connected in series may be constructed, and a hydrogen gas may be supplied parallel to respective unit cell UC groups. In the latter case, a discharge control mechanism is provided at a final stage of respective unit cell UC groups. In the first embodiment, from a viewpoint that an impurity gas is effectively concentrated in a unit cell UC of a final stage Sn, an aspect in which a hydrogen gas is supplied in series, is preferable.

In an example shown in Fig. 3, respective unit cells UC from an initial stage S1 to a final stage Sn are connected in series with a hydrogen supply tube 25, and a hydrogen gas is supplied to a unit cell UC of an initial stage S1 from a hydrogen gas generation cell 20 which is a means for supplying a hydrogen gas. The supplied hydrogen gas is flown to a final stage side while consumed in respective unit cells UC, and is discharged from a discharge control mechanism of a unit cell UC of a final stage Sn.

Upon use of a unit cell UC, a tube for supplying a hydrogen gas may be directly connected to an inlet 5c and an outlet 5d for a hydrogen gas of the metal plate 5, and from a viewpoint of thinning of the fuel cell, it is preferable to provide a tube joint having a pipe which has a small thickness, and is parallel with a surface of the metal plate 5.

As a method of supplying a hydrogen gas, a method of using a hydrogen generator for generating a hydrogen gas by a chemical reaction is preferable in order to suitably control a pressure in an internal surface space using the aforementioned pressure control valve 10. Examples of such the hydrogen generator include a hydrogen generator which accommodates an iron nanoparticle, an aluminum powder or a reaction catalyst, or a porous body thereof in a container, and further comprises a heating means and a water supply means.

On the other hand, the power generating method of the first embodiment can be suitably performed using the fuel cell of the first embodiment. That is, the power generating method of the first embodiment is a power generating method of performing power generation by supplying a hydrogen gas and an oxygen-containing gas to one or a plurality of unit cells formed of a sheet-like solid polymer electrolyte, a cathode-side electrode plate which is arranged on one side of the solid polymer electrolyte, an anode-side electrode plate which is arranged on the other side thereof, an oxygen-containing gas supply unit for supplying an oxygen-containing gas to the cathode-side electrode plate, and a hydrogen gas flow path unit for supplying a hydrogen gas to the anode-side electrode plate, characterized in that, regarding the unit cell which is to be a final stage of hydrogen gas supply, power generation is performed while an impurity gas is concentrated near an outlet by flow of a hydrogen gas, and a small amount of a gas is discharged from the unit cell so that an amount of a concentrated impurity gas becomes not more than a constant amount.

Thereupon, it is preferable that, as the unit cell which is to be a final stage of hydrogen gas supply, a unit cell in which a flow path sectional area of the hydrogen gas flow path unit is not more than 1% of an area of the anode-side electrode plate is used and, at the same time, power generation is performed while a gas is discharged from the unit cell at 0.02 to 4% by volume relative to a hydrogen gas supplied to the unit cell which is to be a final stage of hydrogen gas supply.

Thereupon, from a viewpoint that an impurity gas is effectively concentrated on a downstream side, it is preferable that a hydrogen gas is supplied so that a linear flow rate of a supply gas calculated based on a flow path sectional area of the hydrogen gas flow path unit becomes not less than 0.1 m/sec relative to the unit cell which is to be a final stage of hydrogen gas supply. A linear flow rate of a supply gas is not less than 0.5 m/s, more preferably not less than 1 m/s.

In addition, a concentration of a hydrogen gas contained in a gas discharged from a unit cell UC which is to be a final stage is preferably less than 50% by volume, more preferably less than 40% by volume, further preferably less than 30% by volume.

In the first embodiment, it is preferable that a pressure in a hydrogen gas flow path unit at a position where a discharge control mechanism is provided is not lower than 7 KPa. Thereby, permeation of an impurity gas from a cathode side can be suppressed and, even when a discharge amount of a gas from the discharge control mechanism is smaller, a power generation efficiency can be maintained high.

In the fuel cell of the first embodiment, since a discharge amount of a gas is small, a problem of waste gas treatment and gas release hardly arises, and power generation can be performed stably, continuously and effectively, the cell can be suitably used, particularly, in a mobile instrument such as a portable telephone, a notebook personal computer.

Since the aforementioned problem of waste gas treatment and a power generation efficiency is not limited to a portable instrument, the first embodiment can be widely applied to a fuel cell for an automobile and a power generation apparatus such as cogenerator.

Other modifications of first embodiment
(1) Although in the aforementioned embodiment, an example of using a pressure control valve for discharging a gas so that a pressure on a primary side becomes a constant pressure or lower was shown as a discharge control mechanism, as the discharge control mechanism in the first embodiment, any discharge control mechanism may be used as far as it can discharge a gas at 0.02 to 4% by volume as an average relative to a hydrogen gas supplied to a unit cell.

For example, any of a valve which can manually adjust an opening degree, and an orifice and a fine pore which can not adjust an opening degree may be used. When these are used, a gas is continuously discharged, but a discharge control mechanism by which a gas is intermittently discharged may be used. Alternatively, a discharge control mechanism which discharges periodically a gas only for a constant time may be provided, and a gas may be discharged from a unit cell intermittently regardless of a change in a pressure.

(2) Although in the aforementioned embodiment, an example of arranging a diffusion suppression plate (metal plate) in which an opening is provided at a constant opening rate relative to an area of a cathode-side electrode plate, on a surface of a cathode-side electrode plate, to form an oxygen-containing gas supply unit was shown, an oxygen-containing gas supply unit may be constructed of a flow path groove for an oxygen-containing gas as in an anode side. In that case, a flow path groove, an inlet, and an outlet for an oxygen-containing gas such as the air may be formed by etching or press processing like an anode-side metal plate, and power generation may be performed while the air or the like is supplied through an inlet of a cathode-side metal plate like an anode-side metal plate. Thereupon, examples of a method of suppressing diffusion of water from a cathode side to the outside include a method of supplying an oxygen-containing gas containing water.

(3) Although in the aforementioned embodiment, an example of arranging a metal plate on surfaces of a cathode-side electrode plate and an anode-side electrode plate, to form an oxygen-containing gas supply unit and a hydrogen gas flow path unit, was shown, other materials, and the previously used various separators may be used in place of the metal plate.

In addition, although in the aforementioned embodiment, an example of forming a flow path groove on an anode-side metal plate by etching was shown, in the first embodiment, a flow path groove may be formed on an anode-side metal plate by a mechanical method such as press processing and cutting.

(4) Although in the aforementioned embodiment, an example of exposing a cathode-side electrode plate as it is from an opening of a cathode-side metal plate, in the first embodiment, a hydrophobic polymer porous membrane may be laminated on a cathode-side metal plate so as to cover the opening. The polymer porous membrane may be laminated on an internal side or an external side of a cathode-side plate.

(5) Although in the aforementioned embodiment, as the discharge control mechanism, an example of use of the pressure control valve which discharges a gas so that a first side pressure becomes a constant pressure or lower was shown, as the discharge control mechanism, a discharge control mechanism which controls a flow rate of a secondary side gas so as to be generally constant, may be provided. In that case, it is preferable that a flow rate of a waste gas is detected to perform feedback controlling of an opening degree of a valve.

### Fuel cell of second embodiment

A second embodiment will be explained below by referring to drawings. The fuel cell of the second embodiment can be shown in Fig. 1 to Fig. 2 as in the fuel cell of the first embodiment.

That is, the fuel cell of the second embodiment, as shown in Fig. 1 to Fig. 2, comprises a sheet-like solid polymer electrolyte 1, a cathode-side electrode 2 which is arranged on one side of the solid polymer electrolyte 1, an anode-side electrode plate 3 which is arranged on the other side thereof, a cathode-side metal plate 4 which is arranged on a surface of the cathode-side electrode plate 2 and allows for flow of a gas to an internal surface side, and an anode-side metal plate 5 which is arranged on a surface of the anode-side electrode plate 3, and allows for flow of a fuel to an internal surface side. Parts which are different from those of the fuel cell of the first embodiment will be explained below.

As electrode plates 2, 3, electrode plates which exert the function as a gas diffusion layer, supply and discharge a fuel gas, an oxidizing gas and a water stream and, at the same time, exert the current collecting function can be used. Electrode plate 2, 3 which are the same or different can be used, and it is preferable that a catalyst having the electrode catalyst activity is carried in a substrate thereof. It is preferable that the catalyst is carried at least in internal surfaces 2b,3b in contact with the solid polymer electrolyte 1.

Generally, electrode plates 2, 3 and the solid polymer electrode 1 are designed depending on a reducing gas and an oxidizing gas supplied to the fuel cell. In the second embodiment, it is preferable that the air is used as the oxidizing gas, and a hydrogen gas and a hydrogen-containing gas are used as the reducing gas. Alternatively, in place of the reducing gas, methanol and dimethyl ether and the like may be used.

For example, when the hydrogen gas and the air are used, since a reaction between oxygen and hydrogen ions is caused to produce water in the cathode-side electrode 2 on a side in which the air is naturally supplied, it is preferable to design the electrode depending on such the electrode reaction. Particularly, under the operation condition of a low working temperature, a high current density and a high gas utilization rate, caulking (flooding) phenomenon of an electrode porous body due to condensation of a water steam easily occurs, particularly, in an air electrode where water is produced. Therefore, for obtaining stable properties of the fuel cell over a long period of time, it is effective that water repellency of an electrode is maintained so that flooding phenomenon does not occur.

The cathode-side metal plate 4 is arranged on a surface of the cathode-side electrode plate 2, and the anode-side metal plate 5 is arranged on a surface of the anode-side electrode plate 3. In the present embodiment, an inlet 5c and an outlet 5d for a fuel are provided on the anode-side metal plate 5, and a flow path groove 9 is provided therebetween.

On the cathode-side metal plate 4, an opening 4c for supplying oxygen in the air is provided. As far as the cathode-side electrode plate 2 can be exposed, the opening 4c may have any number, shape, size and formation position. However, in view of an efficiency of supply of oxygen in the air, and the effect of collecting a current from the cathode-side electrode plate 2, an area of the opening 4c is preferably 10 to 50%, particularly preferably 20 to 40% of an area of the cathode-side electrode plate 2.

In the opening 4c of the cathode-side metal plate 4, for example, a plurality of circular pores and slits may be provided regularly or randomly, or an opening may be provided with a metal mesh.

As metal plates 4, 5, any metal can be used as far as it does not adversely influence on the electrode reaction, and examples include a stainless plate, nickel, copper, and a copper alloy. From a viewpoint of an elongation, a weight, an elasticity, an strength, corrosion resistance, press processability, and etching processability, a stainless plate and nickel are preferable. It is preferable that metal plates 4, 5 are plated with a noble metal such as gold plating in order to reduce a contact resistance with electrode plates 2, 3.

A flow path groove 9 provided on the anode-side metal plate 5 may have any planar shape or cross-sectional shape as far as a flow path for a hydrogen gas or the like is formed by contact with the electrode plate 3. In view of a flow path density, a lamination density at lamination, and the bending property, it is preferable to form mainly a longitudinal groove 9a parallel to one side of the metal plate 5, and a transverse groove 9b vertical thereto. In the present embodiment, a plurality of (three, in an example shown) longitudinal grooves 9a are connected in series to a transverse groove 9b, to take a balance between a flow path density and a flow path length.

A part (e.g. transverse groove 9b) of the flow path groove 9 of such the metal plate 5 may be formed on an outer surface of the electrode plate 3. As a method of forming a flow path groove on an outer surface of the electrode plate 3, a mechanical method such as heat pressing and cutting may be used, but in order to suitably perform fine processing, it is preferable to perform groove processing by laser irradiation. Also from a viewpoint of laser irradiation, a substrate for electrode plates 2, 3 is preferably an aggregate of fibrous carbons.

One or a plurality of inlets 5c and outlets 5d which are communicating with the flow path groove 9 of the metal plate 5 may be formed, respectively. As a thickness of metal plates 4, 5 grows smaller, this is effective in thinning as a whole, but in view of a strength, an elongation, a weight, an elasticity, and the handling property, 0.1 to 1 mm is preferable.

As a method of forming the flow path groove 9 on the metal plate 5, etching is preferable from a precision and easiness of processing. It is preferable that the flow path groove 9 obtained by etching has a width of 0.1 to 10 mm, and a depth of 0.05 to 1 mm. In addition, it is preferable that a cross-sectional shape of the flow path groove 9 is generally square, generally trapezoid, generally semicircular, or V-letter.

In the second embodiment, as shown in Fig. 1 to Fig. 2, the anode-side metal plate 5 has an inlet 5c and an outlet 5d for a fuel, and a pressure control valve 10 which controls a pressure in an internal surface side space at a prescribed value is provided at the outlet 5d. When a constant amount or more of a fuel is supplied through the inlet 5c for a fuel, a pressure in the internal surface side space is increased, and a pressure in the internal surface side space (i.e. fuel gas) can be controlled at a prescribed value with a pressure control valve 10.

It is preferable that the pressure control valve 10 can control a pressure in the internal surface side space at a prescribed value in a range of 0.02 to 0.20 MPa, and it is more preferable that the valve can control the pressure at a prescribed value in a range of 0.03 to 0.05 MPa. When the pressure is lower than 0.02 MPa, the effect of improving output is hardly seen and, when the pressure exceeds 0.20 MPa, there is a tendency that leakage from a sealing part occurs, and contact between the metal plate 5 and the electrode plate 3 becomes insufficient.

The pressure control valve 10 may have any form as far as a pressure in an internal surface side space can be controlled at a prescribed value, but in order to simplify a structure, a self-operated control valve is preferable, and an inside detection type is more preferable than an outside detection type. For example, as shown in Fig. 3, a pressure control valve 10 comprising a power imparting means 13 for forcing a valve element 12 towards a valve seat 11, a regulation mechanism 14 for regulating a power imparting force of the power imparting means 13, a valve seat space 15 having a valve seat 11 and accommodating a valve element 12, an introduction flow path 16 which is communicating with the valve seat space 15 and can be sealed with the valve element 12, and a discharge flow path 17 which is communicating with the outside from the valve seat space 15 can be used.
In this pressure control valve 10, when a pressure of a fuel gas to the valve element 12 which seals the introduction flow path 16 becomes a constant pressure or higher, since a gap is generated between the valve element 12 and the valve seat 11 against a power imparting force of the power imparting means 13, and the fuel gas is discharged to the outside via the valve seat space 15 and the discharge flow path 16, an internal pressure can be maintained approximately constant. In addition, since the regulation mechanism 14 for regulating a power imparting force of the power imparting means 13 which forces the valve element 12 is possessed, a set value for control of an internal pressure can be changed.

In the second embodiment, one or a plurality of unit cells as shown in Fig. 2 can be used, and a unit cell UC is composed of a solid polymer electrolyte 1, one pair of electrode plates 2, 3 and one pair of metal plates 4, 5, and a plurality of such the unit cells adhered to a planar heat producing body 10 and the like may be laminated, or may be used by arranging them on the same plane. By adopting such a construction, a fuel cell having a high output can be provided without connecting them with a securing part of such as a bolt and a nut to apply a constant pressure to cell parts.

As a method of supplying a fuel gas, in order to suitably control a pressure in an internal surface side space at a prescribed value in a range of 0.02 to 0.20MPa using the aforementioned pressure control valve 10, a method using a hydrogen generator which generates a hydrogen gas by a chemical reaction is preferable. Examples of such the hydrogen generator include a hydrogen generator in which iron nanoparticles or a reaction catalyst or a porous body thereof is accommodated in a container, and which further comprises heating means and water supply means.

Since the fuel cell of the second embodiment can be thinned, is small, and light, and can be designed into a free shape, the cell can be suitably used, particularly, in a mobile instrument such as a portable telephone, a notebook personal computer.

### Other Modifications of Second Embodiment

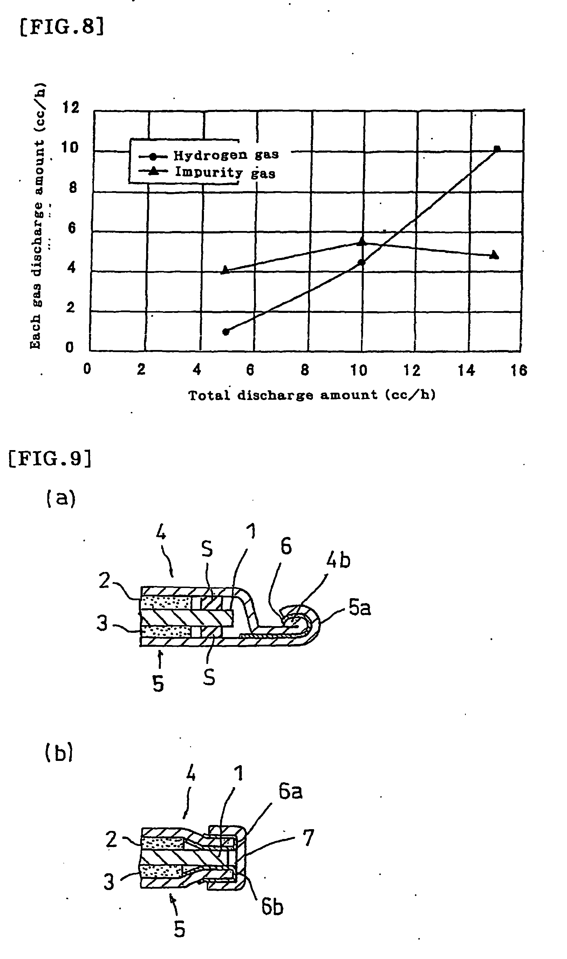

(1) Although in the aforementioned embodiment, an example adopting a caulking structure as shown in Fig. 2 was shown, in the second embodiment, a caulking structure as shown in Fig. 9(a) to Fig. 9(b) may be adopted (in the first embodiment, the similar caulking structure can be adopted).

A caulking structure shown in Fig. 9(a) is a caulking structure in which outer edge parts 4a, 5a of both metal plates 4, 5 are folded back. In this example, a step part is not provided on the metal plate 5, but a step part is provided only on the metal plate 4. In this unit cell, a sealing member S intervenes between each of metal plates 4, 5 and the solid polymer electrolyte 1 so that gases diffused from respective electrode plates 2, 3 are not mixed.

Further, a caulking structure shown in Fig. 9(b) is a caulking structure in which outer edge parts 4a, 5a are press-held with another metal plate 7 via insulating materials 6a, 6b insulating respective metal plates 4, 5 without folding back outer edge parts 4a, 5a of both metal plates 4, 5. In this example, a mildly slanting step part is provided on the metal plate 4 and the metal plate 5. In a caulking structure, both metal plates 4, 5 may be used as a flat plate without press processing.

(2) Although in the aforementioned embodiment, an example in which a flow path groove is formed on the anode-side metal plate by etching was shown, in the second embodiment, a flow path groove may be formed on the anode-side metal plate by a mechanical method such as press processing and cutting.

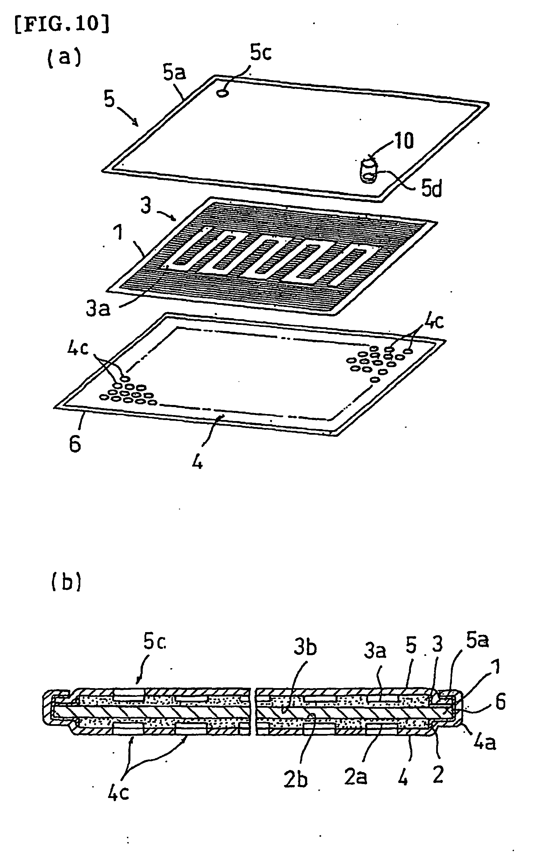

(3) Although in the aforementioned embodiment, an example in which a flow path groove for a fuel is formed on the anode-side metal plate, in the second embodiment, as shown in Fig. 10 (a) to Fig. 10(b), a flow path groove 3a for a fuel may be formed on the anode-side electrode plate 3. In that case, it is also possible that a flow path groove is not provided on the anode-side metal plate 5.

In addition, although in this example, a flow path groove 2a is formed on the cathode-side electrode plate 2 on a side having the opening 4c, a flow path groove 2a may be formed also on the cathode-side electrode plate 2 for the purpose of enhancing diffusivity of the air from the opening 4c of the cathode-side metal plate.

(4) Although in the aforementioned embodiment, an example in which the cathode-side electrode plate is exposed as it is from the opening of the cathode-side metal plate, in the second embodiment, a hydrophobic polymer porous membrane may be laminated on the cathode-side metal plate so as to cover the opening. The polymer porous membrane may be laminated on an internal side or an external side of the cathode-side metal plate.

An average pore diameter of the polymer porous membrane is preferably 0.01 to 3 µm in order to prevent leakage of water droplets while air permeability is maintained. In addition, a thickness of the polymer porous membrane is preferably 10 to 100 µm. Examples of a material for the polymer porous membrane include a fluorine resin such as polyetetrafluoroethylene, polyolefin such as polypropylene and polyethylene, polyurethane, and a silicone resin.

(5) Although in the aforementioned embodiment, an example in which an opening for naturally supplying the air is formed on the cathode-side metal plate was shown, a flow path groove, an inlet and an outlet for a an oxygen-containing gas such as the air may be formed by etching or press processing like the anode-side metal plate. In that case, power generation is performed while the air or the like is supplied through the inlet on the cathode-side metal plate like the anode-side metal plate.

### Examples

Examples specifically showing a construction and the effect of the invention will be explained below.

### Example 1

A groove (width 0.8 mm, depth 0.2 mm, interval 1.6 mm, number 21), a peripheral caulking part, and a gas introduction and discharge pores were provided on SUS (50 mm × 26 mm × 0.3 mm thickness) having corrosion resistance by etching with an aqueous ferric chloride to obtain an anode-side metal plate. Thereupon, a flow path sectional area of a hydrogen gas flow path unit provided on an anode-side metal plate was 0.16 mm³. Similarly, a penetrating pore (0.6 mmφ, pitch 1.5 mm, number 357, opening rate of contact area 13%), a peripheral caulking part, and a gas introduction and discharge pores were provided on SUS (50 mm × 26 mm × 0.3 mm thickness) having corrosion resistance by etching with an aqueous ferric chloride to obtain a cathode-side metal plate. And an insulating sheet (50 mm × 26 mm × 2 mm width, thickness 80 µm) was laminated on SUS.

In addition, a film electrode assembly (49.3 mm × 25.3 mm) was prepared as follows. As a platinum catalyst, 20% platinum-carrying carbon catalyst (EC-20-PTC) manufactured by US Eelectrochem was used. This platinum catalyst, carbon black (Akzo; ketjenblack EC), and vinylidene polyfluoride (kynar) were mixed at a ratio of 75% by weight, 15% by weight and 10% by weight, dimethylformamide was added to the mixture of a platinum catalyst, carbon black and polyvinylidene fluoride so that a 2.5% by weight polyvinylidene fluoride solution was obtained, and this was dissolved and mixed with a mortar to prepare a catalyst paste. A carbon paper (manufactured by Tolay Industries, Inc.; TGP-H-90, thickness 370 µm) was cut into 20 mm × 43 mm, and about 20 mg of the above-prepared catalyst paste was coated thereon with a spatula to dry in a hot air circulation dryer at 80°C. By doing this, a carbon paper carrying 4 mg of a catalyst composition was prepared. A platinum-carrying amount is 0.6 mg/cm²_{.}

Using the above-prepared platinum catalyst-carrying carbon paper, and a Nation film (Nation 112 manufactured by Dupont, 25.3 mm × 49.3 mm, thickness 50 µm) as a solid polymer electrolyte (cation exchange membrane), hot press was performed on both sides of them for 2 minutes using a mold under the condition of 135°C and 2 MPa. The thus obtained film electrode assembly was held by two SUS plates at a center thereof, and this was caulked as shown in Fig. 2, thereby, a thin small micro fuel cell of an external dimension 50 mm × 26 mm × 1.4 mm thickness could be obtained. A flow path sectional area of a hydrogen gas flow path unit of this unit cell was 0.019% relative to an area of an anode-side electrode plate. This was used as a unit cell, and three unit cells were connected in series (gas electricity) as shown in Fig. 3, to construct a fuel cell.

Cell properties of this micro fuel cell were assessed. For assessing fuel cell properties, using a fuel cell assessing system manufactured by Toyo Corporation, a hydrogen gas (purity 100%) was flown on an anode-side at room temperature, a cathode-side was opened in the atmosphere , and this was measured by constant operation at a current of 1.0A (current density 120 mA/cm²). Thereupon, a supply gas flow rate of a hydrogen gas was 22.8 ml/min for an uppermost unit cell, and 7.6 ml/min for a final stage unit cell. In addition, a pressure control valve was provided at an outlet of a final stage unit cell and, by regulating this (set pressure 10 KPa), an average discharge amount of a gas was adjusted to 0.1 ml/min. That is, a gas was set to be discharged at 1.3% by volume relative to a hydrogen gas supplied to a final stage unit cell.

A change in a voltage with time thereupon is shown in Fig. 5. From this result, it was seen that approximately the same output voltage value can be maintained over a long period of time.

### Comparative Example 1

According to the same manner as that of Example 1 except that a pressure control valve was not provided, and a gas was not discharged from a final stage unit cell in Example 1, a fuel cell was manufactured, and fuel cell properties were assessed. The results are shown in Fig. 5. As shown by this result, it was seen that when a gas was not discharged from a unit cell, an output voltage of a fuel cell becomes a half or less in about 20 minutes, and power generation is stopped early.

### Reference Example 1

According to the same manner as that of Example 1 except that a pressure control valve was not provided, and an average gas discharge amount from a final stage unit cell was 4.56 ml/min (20% by volume of total supply amount) while constant operation was performed at a current 1.0 A in Example 1, a fuel cell was manufactured, and fuel cell properties were assessed. Results are shown in Fig. 5. As shown by this result, it was found out that, in Reference Example 1, a voltage is slightly elevated as compared with Example 1, but there is little difference between Example 1.

### Example 2

According to the same manner as that of Example 1 except that a gas was discharged at 1.3% by volume relative to a hydrogen gas supplied to a final stage unit cell while constant operation was performed at a current of 0.5A (3.8 ml/min supply for final stage unit cell) in Example 1, a fuel cell was manufactured, and fuel cell properties were assessed. Results are shown in Fig. 5. As this result shows, it was found out that approximately the same output voltage value can be maintained over a long period of time.

### Comparative Example 2

According to the same manner as that of Comparative Example 1 except that a gas was not discharged from a final stage unit cell while constant operation was performed at a current of 0.5A (3.8 ml/min supply for final stage unit cell) in Comparative Example 1, a fuel cell was manufactured, and fuel cells properties were assessed. Results are shown in Fig. 5. As this result show, it was found out that, when a gas is not discharged from a unit cell, an output voltage of a fuel cell becomes a half or less in about 15 minutes, and power generation is stopped early.

### Example 3

According to the same manner as that of Example 1 except that a gas was discharged at 1.3% by volume relative to a hydrogen gas supplied to a final stage unit cell while constant operation was performed at a current of 1.5A (11.4 ml/min supply for final stage unit cell) in Example 1, a fuel cell was manufactured, and fuel cells properties were assessed. Results are shown in Fig. 5. As this result shows, it was found out that approximately the same output voltage value can be maintained over a long period of time.

### Comparative Example 3

According to the same manner as that of Comparative Example 1 except that a gas was not discharged from a final stage unit cell while constant operation was performed at a current of 1.5 A (11.4 ml/min supply for final stage unit cell) in Comparative Example 1, fuel cell was manufactured, and fuel cells properties were assessed. Results are shown in Fig. 5. As this result shows, it was found out that, when a gas is not discharged from a unit cell, an output voltage of a fuel cell becomes a half or less in about 30 minutes, and power generation is stopped early.

### Example 4

According to the same manner as that of Example 1 except that a gas discharge amount from a final stage unit cell was changed to 0 to 12 cc/h while constant operation was performed at a current of 1.0 A (7.6 ml/min supply for final stage unit cell) in Example 1, fuel cell was manufactured, and fuel cells properties were assessed. Results are shown in Fig 6. As this result shows, it was found that, at 0.6 cc/h (discharge amount 0.13% by volume) or more, approximately the same output voltage value can be maintained over a long period of time, and there is a critical value between 0.6 cc/h and 0 cc/h (0% by volume).

### Example 5

According to the same manner as that of Example 1 except that a pressure was set at 5KPa with a pressure control valve provided at an outlet, and a gas discharge amount from a final stage unit cell was changed to 4.0 to 8.0 cc/h while constant operation was performed at a current of 1.0 A (7.6 ml/min supply for final stage unit cell) in Example 1, a fuel cell was manufactured, and fuel cell properties were assessed. Results are shown in Fig 7. As this result shows, it was found out that at 7.7 cc/h (discharge amount 1.7% by volume) or more, approximately the same output voltage value can be maintained over a long period of time, and there is a critical value between 7.7 cc/h and 5.4 cc/h (1.2% by volume).

### Example 6

According to the same manner as that of Example 1 except that a pressure was set at 5KPa with a pressure control valve provided at an outlet, and a gas discharge amount from a final stage unit cell was changed to 5 to 15 cc/h while constant operation was performed at a current of 1.0 A (7.6 ml/min supply for final stage unit cell) in Example 1, fuel cell was manufactured, and a composition of a discharge gas was measured by gas chromatography. Results are shown in Fig 8. As this result shows, it was found out that, when a gas discharge amount is 5 cc/h to 10 cc/h, a concentration of a hydrogen gas in a discharge gas becomes less than 50% by volume. From comparison of this result, Example 1 and Reference Example 1, it is seen that an impurity gas is concentrated only near a pressure control valve and, for this reason, a power generation efficiency is high.

### Example 7

A groove (width 0.8 mm, depth 0.2 mm, interval 1.6 mm, number 21), a peripheral thin wall part (thickness 100 µm), and a gas introduction and discharge pores were provided on a nickel plate (50 mm × 26 mm × 0.3 mm thickness) by etching with an aqueous ferric chloride. Thereafter, press processing was performed on the peripheral thin wall part to form a step part (step 150 µm) and a circumferential part, and a whole space was plated with gold (plating thickness 0.5 µm) to obtain an anode-side metal plate.

Similarly, a penetrating pore (1.0 mmφ, pitch 1.5 mm, number 350), a peripheral thin wall part, and a gas introduction and discharge pores were provided on a nickel plate (50 mm × 26 mm×0.3 mm thickness) by etching with an aqueous ferric chloride. Thereafter, press processing was performed on the peripheral thin wall part to form a step part (step 150 µm) and a circumferential part, and a whole surface was plated with gold (plating thickness 0.5 µm) to obtain a cathode-side metal plate. And, an insulating sheet (50 mm × 26 mm × 2 mm width, thickness 80 µm) was laminated on the circumferential part.

In addition, a film electrode assembly (49.3 mm × 25.3 mm) was prepared as follows. As a platinum catalyst, a 20% platinum-carrying carbon catalyst (EC-20-PTC) manufactured by USA Electrochem was used. This platinum catalyst, carbon black (Akzo; ketjenblack EC), and polyvinylidene fluoride (kynar) were mixed at a ratio of 75% by weight, 15% by weight and 10% by weight, dimethylformamide was added to the mixture of a platinum catalyst, carbon black and polyvinylidene fluoride so that a 2.5% by weight polyvinylidene fluoride solution was obtained, and this was dissolved and mixed with a mortal to prepare a catalyst paste. A carbon paper (manufactured by Tolay Industries, Inc.; TGP-H-90, thickness 300 µm) was cut into 20 mm × 43 mm, and about 20 mg of the above-prepared catalyst paste was coated thereon with a spatula to dry in a hot air circulation dryer at 80°C. By doing this, a carbon paper carrying 4 mg of a catalyst composition was prepared. A platinum-carrying amount is 0.6 mg/cm².

Using the above-prepared platinum catalyst-carrying carbon paper, and a Nation film (Nafion 112 manufactured by Dupont, 25.3 mm × 49.3 mm, thickness 25 µm) as a solid polymer electrolyte (cation exchange membrane), hot press was performed on both sides of them for 2 minutes using a mold under the condition of 135°C and 2 MPa. The thus obtained film electrode assembly was held by two SUS plates at a center thereof, and this was caulked as shown in Fig. 2, thereby, a thin small micro fuel cell of an external dimension 50 mm × 26 mm × 1.4 mm thickness could be obtained.

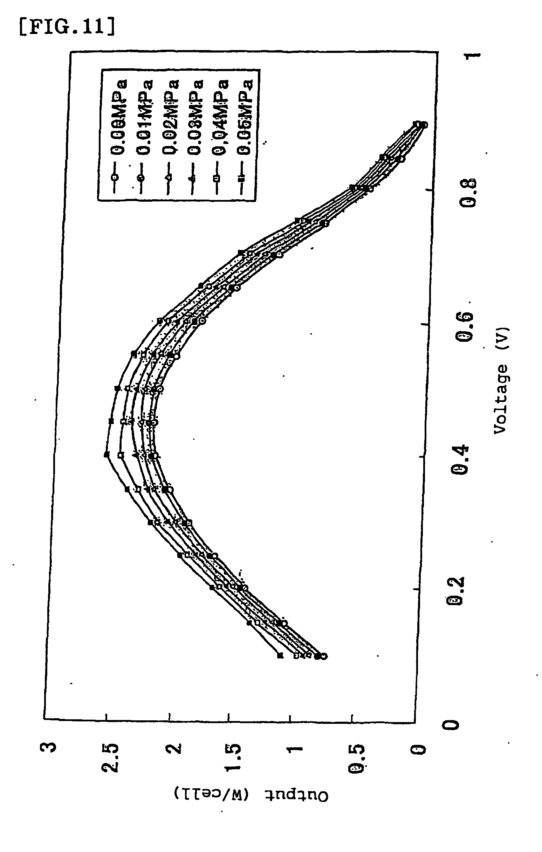

At an outlet of an anode-side metal plate of this fuel cell, a pressure control valve having a structure shown in Fig. 4 was provided, and a pressure was controlled by regulating a regulation mechanism so that a pressure in an internal side space became 0.00 MPa, 0.01 MPa, 0.02 MPa, 0.03 MPa, 0.04 MPa and 0.05 MPa. Cell properties of the fuel cell at that time were assessed, respectively. For assessing fuel cell properties, a fuel cell assessing system manufactured by Toyo Corporation was used, and a pure hydrogen gas was flown on an anode-side at room temperature (a cathode-side was opened in the atmosphere). A gas flow rate was 0.2 L/min. The resulting output density is shown in Fig. 11.

From results shown in Fig. 11, it can be seen that, in the present invention, a high output can be obtained between 0.02 MPa and 0.05 MPa.

### Example 8

Using the same fuel cell as that of Example 7, a control pressure was further increased, and an output of a cell and leakage of a gas from a sealing part thereupon were investigated. As a result, to around 0.10 MPa, an output was increased gradually and, when the pressure exceeded 0.20 MPa, leakage of a gas from a sealing part occurred.

## Claims

1. A fuel cell comprising one or a plurality of unit cells formed of a sheet-like solid polymer electrolyte (1), a cathode-side electrode plate (2) which is arranged on one side of the solid polymer electrolyte (1), an anode-side electrode plate (3) which is arranged on the other side thereof, an oxygen-containing gas supply unit (4c) for supplying an oxygen-containing gas to the cathode-side electrode plate (2), and a hydrogen gas flow path unit for supplying a hydrogen gas to the anode-side electrode plate (3),
wherein, regarding the unit cell to be a final stage of a hydrogen gas supply, a flow path sectional area of the hydrogen gas flow path unit is not more than 1% of an area of the anode-side electrode plate (3), and a discharge control mechanism (10) for discharging a gas at 0.02 to 4% by volume relative to a hydrogen gas supplied to the unit cell is provided at an outlet of the hydrogen gas flow path unit.

2. The fuel cell according to claim 1,
wherein the discharge control mechanism (10) is a pressure control valve which discharges a gas so that a primary side pressure becomes a constant pressure or lower.

3. The fuel cell according to claim 1 or 2,
wherein circumferences of metal plates (4, 5) on both sides of the electrode plates (2, 3) are sealed by bending pressing in the state where they are electrically insulated.

4. The fuel cell according to claim 2,
wherein the pressure control valve (10) comprises power imparting means (13) for forcing a valve element (12) towards a valve seat (11), a regulation mechanism (14) for regulating a power imparting force of the power imparting means (13), a valve seat space (15) having a valve seat (11) and accommodating a valve element (12), an introduction flow path (16) which is communicated with the valve seat space (15) and can be sealed with the valve element (12), and a discharge flow path (17) which is communicated with the outside from the valve seat space (15).

5. The fuel cell according to claim 4,
wherein the pressure control valve (10) can control a pressure in the internal surface side space at a prescribed value in a range of 0.02 to 0.20 MPa.

6. A power generating method of generating power by supplying a hydrogen gas and an oxygen-containing gas to one or a plurality of unit cells formed of a sheet-like solid polymer electrolyte (1), a cathode-side electrode plate (2) which is arranged on one side of the solid polymer electrolyte (1), an anode-side electrode plate (3) which is arranged on the other side thereof, an oxygen-containing gas supply unit which supplies an oxygen-containing gas to the cathode-side electrode plate (2), and a hydrogen gas flow path unit which suppliers a hydrogen gas to the anode-side electrode plate (3),
wherein as the unit cell which is to be a final stage of hydrogen gas supply, a unit cell having a flow path sectional area of the hydrogen gas flow path unit which is not more than 1% of an area of the anode-side electrode plate (3) is used and, at the same time, a gas is discharged from the unit cell at 0.02 to 4% by volume relative to a hydrogen gas supplied to the unit cell which is to be a final stage of hydrogen gas supply.

7. The power generating method according to claim 6,
wherein a hydrogen gas is supplied to the unit cell which is to be a final stage of hydrogen gas supply so that a linear flow rate of a supply gas calculated based on a flow path sectional area of the hydrogen gas flow path unit becomes 0.1 m/second or more.

8. The power generating method according claim 6,
wherein a concentration of a hydrogen gas contained in a gas discharged from the unit cell is less than 50% by volume.

## Patentansprüche

1. Brennstoffzelle mit einer oder einer Vielzahl von Zelleneinheiten, die aus einem flächenkörperartigen Feststoff-Polymerelektrolyten (1), einer kathodenseitigen Elektrodenplatte (2), die auf der einen Seite des Feststoff-Polymerelektrolyten (1) angeordnet ist, einer anodenseitigen Elektrodenplatte (3), die auf der anderen Seite davon angeordnet ist, einer Sauerstoffgas-Zuführungseinheit (4c) zum Zuführen eines Sauerstoff enthaltenden Gases zu der kathodenseitigen Elektrodenplatte (2) sowie aus einer Wasserstoffgas-Strömungswegeinheit zum Zuführen eines Wasserstoffgases zu der anodenseitigen Elektrodenplatte (3) gebildet sind,
wobei hinsichtlich der Zelleneinheit, die eine Endstufe einer Wasserstoffgasversorgung bilden soll, eine Strömungsweg-Querschnittsfläche der Wasserstoffgas-Strömungswegeinheit nicht größer ist als 1 % einer Fläche der anodenseitigen Elektrodenplatte (3), und
wobei ein Abgabesteuerungsmechanismus (10) zum Abgeben eines Gases mit einem Wert von 0,02 bis 4 Vol.-% in Relation zu einem der Zelleneinheit zugeführten Wasserstoffgas an einem Auslaß der Wasserstoffgas-Strömungswegeinheit vorgesehen ist.

2. Brennstoffzelle nach Anspruch 1,
wobei es sich bei dem Abgabesteuerungsmechanismus (10) um ein Drucksteuerventil handelt, das ein Gas derart abgibt, daß ein primärseitiger Druck zu einem konstanten Druck oder niedriger wird.

3. Brennstoffzelle nach Anspruch 1 oder 2,
wobei Umfangsbereiche von Metallplatten (4, 5) zu beiden Seiten der Elektrodenplatten (2, 3) durch Biegepressen in einem Zustand dicht verschlossen sind, in dem sie elektrisch isoliert sind.

4. Brennstoffzelle nach Anspruch 2,
wobei das Drucksteuerventil (10) folgendes aufweist: eine Kraftausübungseinrichtung (13) zum zwangsweisen Bewegen eines Ventilelements (12) in Richtung auf einen Ventilsitz (11), einen Reguliermechanismus (14) zum Regulieren einer Ausübungskraft der Kraftausübungseinrichtung (13), einen Ventilsitzraum (15), der einen Ventilsitz (11) aufweist und in dem ein Ventilelement (12) aufgenommen ist, einen Eintrittsströmungsweg (16), der mit dem Ventilsitzraum (15) in Verbindung steht und mittels des Ventilelements (12) dicht verschlossen werden kann, sowie einen Austrittsströmungsweg (17), der von dem Ventilsitzraum (15) aus mit der äußeren Umgebung in Verbindung steht.

5. Brennstoffzelle nach Anspruch 4,
wobei das Drucksteuerventil (10) einen Druck in dem auf der Seite der Innenfläche gelegenen Raum auf einen vorgeschriebenen Wert in einem Bereich von 0,02 bis 0,20 MPa steuern kann.

6. Stromerzeugungsverfahren zum Erzeugen von Strom durch Zuführen eines Wasserstoffgases und eines Sauerstoff enthaltenden Gases zu einer oder einer Vielzahl von Zelleneinheiten, die aus einem flächenkörperartigen Feststoff-Polymerelektrolyten (1), einer kathodenseitigen Elektrodenplatte (2), die auf der einen Seite des Feststoff-Polymerelektrolyten (1) angeordnet ist, einer anodenseitigen Elektrodenplatte (3), die auf der anderen Seite davon angeordnet ist, einer Sauerstoffgas-Zuführungseinheit zum Zuführen eines Sauerstoff enthaltenden Gases zu der kathodenseitigen Elektrodenplatte (2) sowie aus einer Wasserstoffgas-Strömungswegeinheit zum Zuführen eines Wasserstoffgases zu der anodenseitigen Elektrodenplatte (3) gebildet sind, wobei hinsichtlich der Zelleneinheit, die eine Endstufe einer Wasserstoffgasversorgung bilden soll, eine Zelleneinheit mit einer Strömungsweg-Querschnittsfläche der Wasserstoffgas-Strömungswegeinheit verwendet wird, die nicht größer ist als 1 % einer Fläche der anodenseitigen Elektrodenplatte (3), und wobei gleichzeitig ein Gas von der Zelleneinheit mit einem Wert von 0,02 bis 4 Vol.-% in Relation zu einem Wasserstoffgas abgegeben wird, das der Zelleneinheit zugeführt wird, die eine Endstufe der Wasserstoffgasversorgung bilden soll.

7. Stromerzeugungsverfahren nach Anspruch 6,
wobei ein Wasserstoffgas der Zelleneinheit, die eine Endstufe der Wasserstoffgasversorgung bilden soll, derart zugeführt wird, daß eine lineare Strömungsrate eines Zuführungsgases, die auf der Basis einer Strömungsweg-Querschnittsfläche der Wasserstoffgas-Strömungswegeinheit berechnet wird, einen Wert von 0,1 m/s oder mehr erreicht.

8. Stromerzeugungsverfahren nach Anspruch 6,
wobei die Konzentration eines Wasserstoffgases, das in einem von der Zelleneinheit abgegebenen Gas enthalten ist, weniger als 50 Vol.-% beträgt.

## Revendications

1. Pile à combustible comprenant une ou une pluralité de piles unitaires formées d'un électrolyte polymère solide en couche (1), une plaque d'électrode côté cathode (2) qui est agencée sur un côté de l'électrolyte polymère solide (1), une plaque d'électrode côté anode (3) qui est agencée sur l'autre côté de celui-ci, une unité d'alimentation de gaz contenant de l'oxygène (4c) pour alimenter un gaz contenant de l'oxygène vers la plaque d'électrode côté cathode (2), et une unité de chemin d'écoulement de gaz d'hydrogène pour alimenter un gaz d'hydrogène vers la plaque d'électrode côté anode (3),
dans laquelle, en tant que pile unitaire destinée à être un étage final d'une alimentation de gaz d'hydrogène, une aire de section transversale de chemin d'écoulement de l'unité de chemin d'écoulement de gaz d'hydrogène n'est pas supérieure à 1 % d'une surface de la plaque d'électrode côté anode (3), et un mécanisme de commande de décharge (10) pour décharger un gaz de 0,02 à 4 % en volume par rapport à un gaz d'hydrogène alimenté vers la pile unitaire est disposé à une sortie de l'unité de chemin d'écoulement de gaz d'hydrogène.

2. Pile à combustible selon la revendication 1,
dans laquelle le mécanisme de commande de décharge (10) est une valve de régulation de pression qui décharge un gaz de sorte qu'une pression côté primaire devienne une pression constante ou inférieure.

3. Pile à combustible selon la revendication 1 ou 2,
dans laquelle des circonférences de plaque de métal (4, 5) sur les deux côtés des plaques d'électrode (2, 3) sont scellées par cintrage à la presse dans l'état dans lequel elles sont électriquement isolées.

4. Pile à combustible selon la revendication 2,
dans laquelle la valve de régulation de pression (10) comprend des moyens de transmission de puissance (13) pour forcer un élément de valve (12) vers un siège de valve (11), un mécanisme de régulation (14) pour réguler une force de transmission de puissance des moyens de transmission de puissance (13), un espace de siège de valve (15) ayant un siège de valve (11) et recevant un élément de valve (12), un chemin d'écoulement d'introduction (16) qui communique avec l'espace de siège de valve (15) et peut être scellé avec l'élément de valve (12), et un chemin d'écoulement de décharge (17) qui communique avec l'extérieur de l'espace de siège de valve (15).

5. Pile à combustible selon la revendication 4,
dans laquelle la valve de régulation de pression (10) peut réguler une pression dans l'espace côté surface interne à une valeur prescrite dans une plage de 0,02 à 0,20 MPa.

6. Procédé de génération d'énergie pour générer de l'énergie en alimentant un gaz d'hydrogène et un gaz contenant de l'oxygène vers une ou une pluralité de piles unitaires formées d'un électrolyte polymère solide en couche (1), une plaque d'électrode côté cathode (2) qui est agencée sur un côté de l'électrolyte polymère solide (1), une plaque d'électrode côté anode (3) qui est agencée sur l'autre côté de celui-ci, une unité d'alimentation de gaz contenant de l'oxygène qui alimente un gaz contenant de l'oxygène vers la plaque d'électrode côté cathode (2), et une unité de chemin d'écoulement de gaz d'hydrogène qui alimente un gaz d'hydrogène vers la plaque d'électrode côté anode (3),
dans lequel, en tant que pile unitaire destinée à être un étage final d'une alimentation de gaz d'hydrogène, une pile unitaire ayant une aire de section transversale de chemin d'écoulement de l'unité de chemin d'écoulement de gaz d'hydrogène, qui n'est pas supérieure à 1 % d'une surface de la plaque d'électrode côté anode (3), est utilisée, et simultanément, un gaz est déchargé depuis la pile unitaire de 0,02 à 4 % en volume par rapport à un gaz d'hydrogène alimenté vers la pile unitaire, qui est destinée à être un étage final de l'alimentation de gaz d'hydrogène.

7. Procédé de génération d'énergie selon la revendication 6,
dans lequel un gaz d'hydrogène est alimenté vers la pile unitaire destinée à être un étage final d'alimentation de gaz d'hydrogène, de sorte qu'un débit linéaire d'un gaz d'alimentation calculé sur la base d'une aire de section transversale de chemin d'écoulement de l'unité de chemin d'écoulement de gaz d'hydrogène devienne 0,1 m/seconde ou plus.

8. Procédé de génération d'énergie selon la revendication 6,
dans lequel une concentration d'un gaz d'hydrogène contenu dans un gaz déchargé depuis la pile unitaire est inférieure à 50 % en volume.
